# EUROPEAN PATENT SPECIFICATION

(11) **EP 0 370 735 B1**
(45) Date of publication and mention of the grant of the patent: **25.08.1993**
(21) Application number: 89312019.6
(22) Date of filing: 20.11.1989
(51) Int. Cl.: C08F 255/02, B29C 47/04

(54) **Manufacture of modified polypropylene compositions using non-intermeshing twin screw extruder**
Herstellung von modifizierten Polypropylen-Zusammensetzungen unter Verwendung eines nichtkämmenden Doppelschneckenextruders
Fabrication de compositions de polypropylène modifié utilisant une extrudeuse à deux vis non interengrenantes

(30) Priority: 23.11.1988 GB 8827336
(43) Date of publication of application: 30.05.1990
(73) Proprietor: Du Pont Canada Inc., Mississauga, Ontario L5M 2H3 (CA)
(72) Inventor: Kelusky, Eric Charles, Brights Grove Ontario NON 1CO (CA)
(74) Representative: Harrison, David Christopher

(56) References cited:
- GB-A- 1 519 500
- US-A- 3 742 093
- US-A- 4 698 395
- US-A- 4 762 890

## Description

The present invention relates to the manufacture of modified polypropylene compositions, and especially to the grafting of alpha,beta unsaturated carboxylic acids and anhydrides on to polypropylene, and to improvements in adhesion that are unexpectedly attainable by manufacturing the composition using a twin screw extruder having non-intermeshing screws, instead of using a twin screw extruder having intermeshing screws.

Polypropylene is used in a wide variety of end-uses. However, it is a non-polar polymer and thus tends to exhibit poor or no adhesion to polar materials. A number of proposals have been made to improve the adhesive properties of polypropylene, including the grafting of alpha,beta unsaturated carboxylic acids and anhydrides onto the polypropylene backbone. For example, JP-A-44-15422 of F. Ide et al, Mitsubishi Rayon Co., discloses the grafting of polypropylene in solution. JP-A-53-18144 of K. Sadakata et al, Mitsubishi Rayon Co., discloses the grafting of polypropylene in a slurry state. JP-A-43-27421 of F. Ide et al, Mitsubishi Rayon Co., discloses the grafting of polypropylene in a molten state.

The use of melt grafting techniques has the advantage of being a simple operation, and thus offers the potential of being the most economical method of grafting polypropylene. The grafting of molten propylene polymers is disclosed in GB-A-1 519 500 of BASF. However, JP-A-57-65747 of Y. Wachi et al and 57-65746 of M. Fujiyama et al (Tokuyama Soda K.K.) disclose that the grafted polypropylene obtained from a melt grafting process contains residual unreacted monomer. This residual monomer tends to cause lack of adhesion and the formation of blisters e.g. in moulding or other forming operations.

Methods for the removal of the residual monomer are known, including removal of the unreacted monomer using a solvent-precipitation technique and by agitation with a good solvent e.g. as disclosed in JP-A-54-99193 of Y. Nakajima et al. EP-A-0 202 921 of T. Inoue et al, which corresponds to US-A-4 698 395 discloses treatment of grafted polyolefins by adding an aqueous solution of an alkali metal hydroxide to grafted polymer dissolved in organic solvent. A process in which the grafted polymer is treated in melt processing apparatus is disclosed in copending EP-A-0 370 736.

Compositions of grafted alpha-olefin polymer containing metal carbonates are disclosed in JP-A-57 144 731 of Mitsui Polychemicals. Addition of metal compounds e.g. calcium, magnesium or aluminum compounds, to grafted polyolefins is disclosed in JP-A-57 080 046 of Toyo Ink Manufacturing KK, and in CA-A-1 009 787 of K. Shirayama et al.

US-A-4 762 890 of Strait et al discloses grafting maleic anhydride onto ethylene polymers, especially high density polyethylene and linear low density polyethylene, in co-rotating twin screw extruders.

It has now been found that improvements in the adhesion of grafted polypropylene to other materials may be achieved even without steps being taken to remove the component in grafted polypropylene that is believed to be detrimental to adhesion thereof to other materials, by grafting polypropylene in melt processing apparatus that is a twin screw extruder having non-intermeshing screws.

Accordingly, the present invention provides a method for the grafting of alpha,beta-unsaturated acids and anhydrides onto polypropylene comprising the steps of:
(a) admixing polypropylene in melt processing apparatus with 0.01 to 5% by weight of at least one of alpha,beta unsaturated carboxylic acid and alpha,beta-unsaturated carboxylic anhydride and 0.01 to 2% by weight of an organic peroxide at a temperature above the melting point of the polypropylene, said melt processing apparatus being a twin-screw extruder comprised of a pair of elongated communicating barrels with parallel adjacent rotatable screws located therein, said screws having flights thereon that are in a non-intermeshing relationship; and
(b) extruding and recovering grafted polypropylene.

In a preferred embodiment of the process of the present invention, the polypropylene is grafted with maleic acid or, preferably, maleic anhydride.

In a further embodiment, the grafted polypropylene is treated with an aqueous solution of sodium hydroxide or has an alkaline material added thereto.

The component which has been believed to cause the detrimental effects in the adhesion of grafted polypropylene has been referred to above as residual monomer i.e. maleic anhydride, if the grafting monomer was maleic anhydride. While there may be evidence to that effect, there are also reasons to believe that detrimental effects are caused by low molecular weight polymers or adducts of maleic anhydride and propylene. It is known that polypropylene has a tendency to scission or de-polymerize in the presence of organic peroxides or on application of high shear stress in an extruder, thereby forming propylene monomer, and the propylene monomer may react with the grafting monomer e.g. maleic anhydride, to form a low molecular weight copolymer or an adduct of propylene and maleic anhydride. However, the nature of the component that causes the detrimental effects in adhesion of grafted polypropylene to other materials is not critical to the present invention.

As used herein, the expression "polypropylene" refers to homopolymers of propylene, to impact or so-called block copolymers of propylene with ethylene in which the ethylene content is less than 25% by weight and to random copolymers of propylene with ethylene in which the ethylene content is less than 8% by weight. In preferred embodiments, the polypropylene is of relatively high molecular weight, especially polypropylene having a low melt flow index e.g. in the range of 0.5-1.5 dg/min, although the method of the present invention is not restricted to such polymers and may be used with polypropylenes having a broad range of molecular weights i.e. a broad range of melt flow indices.

The melt processing apparatus used in the method of the present invention is a twin screw extruder that is characterized by having the screws thereof in a non-intermeshing relationship, in contrast to the intermeshing relationship of screws of twin screw extruders more commonly known in the art. Twin screw extruders generally have a feed section, one or more barrels containing the screws, and a die or other exit zone of the extruder. The twin screw extruders used in the method of the present invention have a pair of elongated barrels that are in a communicating relationship, such that molten polymer in one barrel may be interchanged with molten polymer in the other barrel in order to facilitate admixing of the polymer being processed in the extruder. Each barrel contains a screw that is rotatable within the barrel, each screw being comprised of a shaft with flights thereon that are adapted for the conveying of molten polymer along the barrel of the extruder; such flights are usually adapted at least in part to facilitate mixing of polymer. The screws are parallel, being located in an adjacent but spaced apart relationship such that the flights of the screws do not intermesh. Nonetheless, during operation of the extruder, molten polymer will be transferred from the region of one screw to the region of the other screw. Such twin screw extruders are known, an example of which is described in US-A-3 742 093 of R.H. Skidmore, in the separation of a substantially insoluble liquid from a mixture containing a polymer or polymer mixture e.g. to separate residual liquids in a process for the manufacture of acrylonitrile-butadiene-styrene copolymers, or cooling of polyethylene in the cross-linking thereof by using a cross-linking agent dispersed or dissolved in a carrier that may be vaporized in order to cool the polymer.

In the method of the invention, polypropylene, grafting monomer and organic peroxide are fed to the melt processing apparatus. The polypropylene is as defined above. The molecular weight of the polypropylene will depend on the intended end-use of the grafted polymer, it being understood that the molecular weight of the polypropylene will likely be decreased significantly during the grafting reaction, as will be understood by those skilled in the art.

The grafting monomer is at least one of alpha,beta-ethylenically unsaturated carboxylic acids and anhydrides, including derivatives of such acids and anhydrides. Examples of the acids and anhydrides, which may be mono-, di- or polycarboxylic acids, are acrylic acid, methacrylic acid, maleic acid, fumaric acid, itaconic acid, crotonic acid, itaconic anhydride, maleic anhydride and substituted maleic anhydride e.g. dimethyl maleic anhydride. Examples of derivatives of the unsaturated acids are salts, amides, imides and esters e.g. mono- and disodium maleate, acrylamide, maleimide and diethyl fumarate.

The amount of grafting monomer is in the range of 0.01 to 5% by weight of the polymer. In preferred embodiments, the amount of grafting monomer is in the range of 0.1 to 2%, especially 0.1 to 0.4% or 0.2 to 1.5% and particularly 0.2 to 0.6%, by weight of the polymer. The grafting monomer may be fed directly to the melt processing apparatus or, alternatively, coated onto pellets or other comminuted shapes of a polymer or blended into polymer and fed to the melt processing apparatus. The polymer may be the polypropylene that is to be grafted or, preferably, is a polymer of higher melt index i.e. lower molecular weight, so as to facilitate admixing of polypropylene with the grafting monomer.

The organic peroxide, which as used herein includes hydroperoxides, may for example be a bis(tert. alkyl peroxy alkyl) benzene, dicumyl peroxide or acetylenic diperoxy compound. Other organic peroxides are known to those skilled in the art, including t-butyl hydroperoxide and di-t-butyl peroxide. The peroxides used in the method of the present invention preferably have a half-life at 150°C of from about one minute to about 120 minutes. A preferred organic peroxide is 2,5-dimethyl-2,5-bis-(tert. butyl peroxyisopropyl) benzene which is available under the trademark Vulcup from Hercules Inc. Other preferred organic peroxides are 2,5-dimethyl-2,5-di-(tert. butyl peroxy) hexane and 2,5-dimethyl-2,5-di-(tert. butyl peroxy) hexyne-3, which are available under the trademarks Lupersol 101 and Lupersol 130, respectively, from Lucidol Division of Pennwalt Corporation.

The amount of organic peroxide is in the range of 0.01% to 1% by weight of the polymer, especially in the range 0.05 to 0.5% by weight of the polymer. However, as will be understood by those skilled in the art, the amount of organic peroxide may depend on the nature and amount of any additives in the polymer. For example, the polypropylene may contain stabilizing agents, especially antioxidants, although it is preferred that stabilizing agents be added subsequent to the grafting reaction in the method of the present invention. The organic peroxide may be fed directly to the melt processing apparatus or, alternatively, coated onto pellets or other comminuted shapes of a polymer or blended into polymer and fed to the melt processing apparatus. The polymer may be the polypropylene that is to be grafted or, preferably, is a polymer of higher melt index i.e. lower molecular weight, so as to facilitate admixing of polypropylene with the organic peroxide.

In embodiments, the polypropylene, grafting monomer and organic peroxide are admixed in the melt processing apparatus under conditions such that the polymer is in a molten state and which provide a degree of mixing of polymer, monomer and organic peroxide so that a grafted product of commercially acceptable uniformity is obtained. Such a degree of mixing will be understood by those skilled in the art. The temperature of the polymer will be above the melting point of the polymer; it will, however, be appreciated that chain scission of polypropylene tends to occur more readily at higher temperatures, which lowers the molecular weight of the polymer, and thus the temperature of the polymer is usually controlled above but relatively close to the melting point of the polymer. The organic peroxide will be selected so that the half-life of the peroxide under the melt processing conditions is of a sufficient duration to obtain the uniform product. As will be appreciated, if the half-life is too short the uniformity of the grafting process will be affected, and if the half-life is too long the amount of organic peroxide that has not decomposed when the grafted polypropylene passes from the melt processing apparatus will be at too high a level, to the detriment of the uniformity and quality of the product.

In an embodiment of the invention, the grafted polymer is contacted with a solution of an alkaline material while in a molten condition. In such an embodiment, the melt processing apparatus would have a section in which the grafted polymer may be contacted with a minor amount of the aqueous solution of alkaline material prior to extrusion through a die or other device of the melt processing apparatus. The section in which the polymer is contacted with the aqueous solution has an inlet port and an outlet port; the outlet port may be located upstream or downstream of the inlet port, or both. Melt processing apparatus having such ports is known, examples of which are extruders obtainable from Welding Engineers Inc. of Blue Bell, Pennsylvania, U.S.A., an embodiment of which is described in the aforementioned US-A-3 742 093. The use of such apparatus in the grafting of monomers onto polypropylene is described in greater detail in the aforementioned copending EP-A-0 370 736. The alkaline material is preferably an alkali metal hydroxide, carbonate or bicarbonate, of which sodium hydroxide is the preferred alkaline material. The alkaline material must be capable of being dissolved or uniformly dispersed in a fine particle size in the aqueous solution, so that a high degree of mixing of polymer and alkaline material is obtainable in the melt processing apparatus.

In this embodiment of the method, the aqueous solution is fed to the inlet port of the melt processing apparatus and admixed with the grafted polymer in the melt processing apparatus. Preferably, a high degree of admixing of the aqueous solution and polymer is achieved, so that a high degree of contact between the alkaline material and the residual monomer, or monomer-containing by-products e.g. maleic acid or anhydride-containing by-products, is obtained prior to the aqueous solution passing from the melt processing apparatus through the outlet port. The period of time that the polypropylene is in a molten condition in the melt processing apparatus prior to reaching the treatment with alkaline material should be at least five times the half-life of the organic peroxide at the temperature of the polypropylene, although the treatment with alkaline material will tend to decompose any remaining organic peroxide.

In alternate embodiments of the invention, an alkaline material may be added to the polypropylene, especially after the polypropylene has been grafted with monomer. The alkaline material is preferably a metal compound and especially an oxide of calcium, magnesium or aluminum. Alternatively, the metal compound may be a carbonate, bicarbonate, hydroxide or sulphate of calcium, magnesium, aluminum, zinc, titanium or zirconium. Alternatively, zeolites, silica gel or alumina may be used. The alkaline material may be added in amounts of up to about 20% by weight, and especially up to about 6% by weight. The alkaline material may be added prior to extruding the grafted polypropylene from the extruder, or in a subsequent melt processing step.

In embodiments of the method of the invention, additional polymers and/or stabilizing agents, pigments are added to the grafted polymer, subsequent to any treatment thereof with or addition of alkaline material but prior to extrusion of the grafted polymer from the melt processing apparatus. For example, additional polypropylene may be added, especially to decrease the melt index of the grafted polymer composition. Toughening agents, for example, elastomers may be added e.g. in amounts of up to about 25% by weight of the composition, but any such toughening agents should be highly dispersed in the resultant composition.

The grafted polypropylene that has been obtained using the method of the present invention may be used in a variety of end-uses, including in adhesive compositions. For instance, the grafted polypropylene may be admixed with other polymers, examples of which are polyethylene, polypropylene, ethylene/vinyl acetate copolymers, ethylene/ethyl acrylate or methacrylate copolymers, ethylene/carbon monoxide/alkyl acrylate copolymers, elastomeric copolymers e.g. ethylene/propylene copolymers and ethylene/propylene/diene copolymers, in order to form adhesive compositions.

The present invention is illustrated by the following examples:

### Example I

This example illustrates various embodiments of the method of the invention.

The extruder used in this example was a 2.0 cm non-intermeshing, counter-rotating twin screw extruder that had been manufactured by Welding Engineers of Blue Bell, Pennsylvania, U.S.A. The extruder had a barrel with a ratio of length:diameter (L/D) of 60:1, and was equipped with vents ports at L/D positions (as measured from the inlet) of 33:1 and 45:1 and a liquid (solvent) injection port between the vents, at an L/D of 40:1. The extruder was operated at 350 rpm and a barrel temperature of 170°C; the final melt temperature of the polymer was 210°C. The polymer was extruded from the extruder in the form of a strand, which was fed to a water bath and pelletized.

The following composition was fed to the inlet of the extruder:
(a) 100 parts by weight of powdered homopolymer polypropylene having a melt flow index of 0.6 dg/min, obtained from Himont Inc. under the trade designation PP6801;
(b) 0.3 parts by weight of Lupersol 101 organic peroxide, which was coated on the powdered polypropylene; and
(c) 0.9 parts by weight of maleic anhydride, which was in the form of a crystalline powder and which was physically admixed with the coated polypropylene.

In Run 1, the composition was extruded, without injection of liquid to the extruder and with the vent ports being at atmospheric pressure. The pelletized grafted polymer obtained was analyzed for graft content using infrared analysis and for residual maleic anhydride using high performance liquid chromatography.

In Run 2, the procedure of Run 1 was repeated, except that a vacuum of 100 mm Hg was applied to both of the vent ports.

In Run 3, the procedure of Run 2 was repeated, except that water was injected through the injection port between the vent ports at a rate that was 4.5% of the polymer extrusion rate.

In Run 4, the procedure of Run 2 was repeated, except that an aqueous solution of sodium hydroxide (0.1% by weight) was injected at a rate that was 3.7% of the polymer extrusion rate.

In Run 5, the procedure of Run 4 was repeated except that the aqueous solution contained 1.0% by weight of sodium hydroxide.

In Run 6, the procedure of Run 4 was repeated except that the aqueous solution was replaced with acetone.

The grafted polymer was tested for adhesion as follows:
A film (0.1 mm) of the grafted polymer, formed by pressing pellets between sheets of Teflon® fluoropolymer, was placed between sheets of aluminum (0.2 mm) that had been pre-cleaned with carbon tetrachloride. The resultant sandwich was heated at 220°C for 10 minutes and then pressed (70 kg/cm²) for one minute at 220°C. The laminate obtained was cut into a number of strips measuring 200 x 25 mm, which were subjected to a 180° peel test, at 23°C and 50% relative humidity, using an Instron* testing apparatus.
* denotes trademark

The adhesion results obtained are reported in Table I.

**TABLE I**

| Run No. | Vacuum (mm) | Solvent | Grafted Monomer (%)** | Residual Monomer (%)*** | Adhesion (g/cm) |
|---|---|---|---|---|---|
| 1 | 0 | - | 0.36 | 735 | 0 |
| 2 | 100 | - | 0.31 | 166 | 500 |
| 3 | 100 | water | 0.26 | 147 | 485 |
| 4 | 100 | 0.1% NaOH | 0.29 | 263 | 555 |
| 5 | 100 | 1.0% NaOH | 0.27 | 163 | 735 |
| 6 | 100 | acetone | 0.25 | 65 | 520 |

| | | | | | |
|---|---|---|---|---|---|
| ** obtained by infrared analysis | | | | | |
| *** obtained by liquid chromatography | | | | | |

The results show that the application of a vacuum and contacting with a solution improves the adhesive characteristics of the resultant polymer. The runs of the invention, Runs 4 and 5 in which the grafted polymer was washed with sodium hydroxide, gave the best results, especially Run 5 which used the higher concentration of sodium hydroxide.

### Example II

Each of the grafted polypropylenes of Example I was melt blended, using the Welding Engineers twin screw extruder of Example I. 35 parts by weight of the grafted polypropylene were blended with 41 parts by weight of a homopolymer of propylene having a melt flow index ot 0.8 dg/min, 20 parts by weight of a linear low density polyethylene (ethylene/octene-1 copolymer) having a density of 0.920 g/cm³ and a melt index of 1.0 dg/min (Dowlex* 2045, obtained from Dow Chemical Co.) and 4 parts by weight of calcium oxide. The resulting compositions were coextruded as the middle layer of a three-layer structure. The structure was as follows:
homopolymer polypropylene (0.11. mm)/ composition (0.02-0.038mm)/ ethylene/vinyl alcohol copolymer (0.06-0.076 mm), in which the polypropylene was Shell 5520 polypropylene and the ethylene/vinyl alcohol copolymer was Selar® 3003 polymer. Coextrusions were performed at 210°C and at 230°C. Samples having a length of 10 cm and a width of 2.5 cm were cut from the coextrusions and subjected to 180° peel tests at 23°C and 50% relative humidity, using the Instron tester.
* denotes trademark

The results obtained are given in Table II. In the Table, Run 1A uses the grafted polypropylene of Run 1, and so forth.

**TABLE II**

| Run No. | Graft in Composition (%) | Composition Melt Flow (dg/min) | Adhesion 210°C (kg/cm) | Adhesion 230°C (kg/cm) |
|---|---|---|---|---|
| 1A | 0.11 | 13.5 | 1.86 | 1.79 |
| 2A | 0.07 | 10.8 | 1.86 | 1.89 |
| 3A | 0.07 | 12.7 | 1.70 | 1.79 |
| 4A | 0.07 | 11.7 | 2.06 | 1.86 |
| 5A | 0.07 | 9.4 | 2.06 | 1.97 |
| 6A | 0.07 | 8.4 | 1.56 | 1.91 |

The results in Table II show that grafted polypropylene obtained by the method of the present invention may be used in adhesives that exhibit excellent bond strength at 210° and 230°C.

### Example III

In a series of comparative runs, polypropylene was grafted in twin screw extruders equipped with intermeshing screws. The comparative samples were prepared as follows:
Run 7: 33.6 parts of a homopolymer of propylene having a melt flow index of 0.8 dg/min in pellet form that had been coated with 0.1 part of Lupersol 101 organic peroxide and 4 parts of calcium oxide were fed to a 4.3 cm Berstorff* twin screw extruder equipped with intermeshing screws, at Barrel 1 of the extruder. 0.3 Parts of maleic anhydride were injected onto the pellets in the extruder at Barrel 2 thereof. Additional homopolymer polypropylene (62 parts) was added near the exit from the extruder, at Barrel 5. The temperatures in the extruder were 30°C in Barrel 1, 150°C in Barrel 2 and 170°C at the exit from the extruder; the screws were operated at 350 rpm. The grafted polymer extruded from the extruder was pelletized. To prepare samples for testing for adhesion, 80 parts of the grafted polypropylene were melt blended with 20 parts of Dowlex 2045 polyethylene in a 2 cm Welding Engineers non-intermeshing twin screw extruder at 180°C.
Run 8: 35.1 parts of a homopolymer of propylene having a melt flow index of 0.8 dg/min in pellet form that had been coated with 0.1 part of Lupersol 101 organic peroxide and 4.3 parts of calcium oxide were fed to a 4.3 cm Berstorff twin screw extruder equipped with intermeshing screws, at Barrel 1 of the extruder. 0.3 Parts of maleic anhydride were injected onto the pellets in the extruder at Barrel 2 thereof. Additional homopolymer polypropylene (60.2 parts) was added near the exit from the extruder, at Barrel 5. The temperatures in the extruder were 30°C in Barrel 1, 150°C in Barrel 2 and 170°C at the exit from the extruder; the screws were operated at 350 rpm. The grafted polymer extruded from the extruder was pelletized. To prepare samples for testing for adhesion, 80 parts of the grafted polypropylene were melt blended with 20 parts of Dowlex 2045 polyethylene in a Wilmod single screw extruder at 200°C.
Run 9: 34.9 parts of a homopolymer of propylene having a melt flow index of 0.8 dg/min in pellet form that had been coated with 0.1 part of t-butyl perbenzoate organic peroxide were fed to a 4.3 cm Berstorff twin screw extruder equipped with intermeshing screws, at Barrel 1 of the extruder; calcium oxide was not fed to the extruder. 0.3 Parts of maleic anhydride were injected onto the pellets in the extruder at Barrel 2 thereof. Additional homopolymer polypropylene (64.7 parts) was added near the exit from the extruder, at Barrel 5. The temperatures in the extruder were 30°C in Barrel 1, 150°C in Barrel 2 and 170°C at the exit from the extruder; the screws were operated at 350 rpm. The grafted polymer extruded from the extruder was pelletized. To prepare samples for testing for adhesion, 76 parts of the grafted polypropylene were melt blended with 20 parts of Dowlex 2045 polyethylene and 4 parts of calcium oxide in a 30 mm Werner & Pfleiderer* twin screw extruder at 200°C.
Run 10: 99.53 parts of a homopolymer of propylene having a melt flow index of 0.6 dg/min in powder form that had been coated with 0.20 parts of dicumyl peroxide and 0.27 parts of maleic anhydride were fed to a 30 mm Werner & Pfleiderer twin screw extruder operating at 180°C. To prepare samples for testing for adhesion, 76.8 parts of the grafted polypropylene were melt blended with 20 parts of Dowlex 2045 polyethylene and 3.2 parts of calcium oxide in a Werner & Pfleiderer twin screw extruder at 180°C.
Run 11: This comparative composition was a sample of a commercially-available maleic-anhydride grafted polypropylene, comprised of approximately 4% by weight of grafted polypropylene that had been prepared in a solution grafting process, 76% of un-grafted polypropylene and 20% of an ethylene/alpha-olefin toughening copolymer.

* denotes trade mark
* denotes trade mark

The comparative compositions were tested for adhesion using the procedure of Example II. Further details and the results obtained are given in Table III.

**TABLE III**

| Run No. | Graft in Composition (%) | Adhesion 210°C (kg/cm) | Adhesion 230°C (kg/cm) |
|---|---|---|---|
| 7 | 0.08 | 0.65 | - |
| 8 | 0.10 | 0.68 | - |
| 9 | 0.11 | - | 1.07 |
| 10 | 0.09 | 1.02 | - |
| 11 | 0.09 | 0.38 | 0.61 |

A comparison of the results of Tables II and III shows that the samples prepared using the grafted polypropylene that had been obtained by grafting polypropylene in the twin screw extruder equipped with non-intermeshing screws viz. Runs 1A to 6A, exhibit substantially superior adhesion in the test performed to samples prepared by grafting polypropylene in a twin screw extruder equipped with intermeshing screws and to the sample prepared with the grafted polypropylene obtained from a solution grafting process. The differences in the adhesion obtained are almost a factor of two between the best of the comparative tests to the poorest of the tests of the grafted polypropylene obtained according to the invention, and more than a factor of two in the better of the latter tests. The results for the grafted polypropylene obtained according to the invention are close to the tensile strength of the adhesive samples (approximately 2.7 kg/cm).

## Claims

1. A method for the grafting of alpha,beta-unsaturated acids and anhydrides onto polypropylene comprising the steps of:
(a) admixing polypropylene in melt processing apparatus with 0.01 to 5% by weight of at least one of alpha-beta-unsaturated carboxylic acid and alpha,beta-unsaturated carboxylic anhydride and 0.01 to 2% by weight of an organic peroxide at a temperature above the melting point of the polypropylene, said melt processing apparatus being a twin-screw extruder comprised of a pair of elongated communicating barrels with parallel adjacent rotatable screws located therein, said screws having flights thereon that are in a non-intermeshing relationship; and
(b) extruding and recovering grafted polypropylene.

2. A method according to claim 1 in which the polypropylene is grafted with maleic acid and/or maleic anhydride.

3. A method according to claim 2 in which the amount of maleic anhydride is in the range of 0.1 to 2% by weight.

4. A method according to any one of claims 1 to 3 in which the amount of organic peroxide is in the range of 0.05 to 0.5% by weight.

5. A method according to any one of the preceding claims in which the grafted polypropylene is treated with an aqueous solution of sodium hydroxide.

6. A method according to any one of claims 1 to 4 in which the grafted polypropylene has an alkaline material added thereto.

7. A method according to any one of the preceding claims in which at least one of ungrafted polypropylene and a toughening agent is subsequently blended with the grafted polypropylene.

8. A method according to any one of the preceding claims in which the polypropylene is a homopolymer of propylene.

9. A method according to any one of claims 1 to 7 in which the polypropylene is a block copolymer of propylene and ethylene in which the ethylene content is less than 25% by weight or a random copolymer of propylene and ethylene in which the ethylene content is less than 8% by weight.

## Patentansprüche

1. Verfahren zum Aufpfropfen von alpha,beta-ungesättigten Säuren und Anhydriden auf Polypropylen, folgende Schritte umfassend:
(a) das Mischen von Polypropylen in einem Schmelzbearbeitungsgerät mit 0,01 bis 5 Gew.-% zumindest eines Mitglieds der Gruppe enthaltend alpha,beta-ungesättigte Karbonsäuren und alpha,beta-ungesättigte Karbonsäureanhydride und mit 0,01 bis 2 Gew.-% eines organischen Peroxids bei einer Temperatur über dem Schmelzpunkt des Polypropylens, wobei das genannte Schmelzbearbeitungsgerät ein Doppelschneckenextruder ist, der aus einem Paar länglicher kommunizierender Trommeln mit darin angeordneten parallelen benachbarten drehbaren Schnecken besteht, wobei die genannten Schnecken Gänge aufweisen, die sich in nicht ineinandergreifender Beziehung befinden; und
(b) das Extrudieren und Gewinnen von gepfropftem Polypropylen.

2. Verfahren nach Anspruch 1, bei dem das Polypropylen mit Maleinsäure und/oder Maleinsäureanhydrid gepfropft wird.

3. Verfahren nach Anspruch 2, bei dem die Menge an Maleinsäure im Bereich von 0,1 bis 2 Gew.-% liegt.

4. Verfahren nach einem der Ansprüche 1 bis 3, bei dem die Menge an organischem Peroxid im Bereich von 0,05 bis 0,5 Gew.-% liegt.

5. Verfahren nach einem der vorhergehenden Ansprüche, bei dem das gepfropfte Polypropylen mit einer wässerigen Natriumhydroxidlösung behandelt wird.

6. Verfahren nach einem der Ansprüche 1 bis 4, bei dem dem gepfropften Polypropylen ein alkalisches Material hinzugefügt wird.

7. Verfahren nach einem der vorhergehenden Ansprüche, bei dem zumindest ein Mitglied der Gruppe enthaltend ungepfropftes Polypropylen und ein Verstärkungsmittel daraufhin mit dem gepropften Polypropylen vermischt wird.

8. Verfahren nach einem der vorhergehenden Ansprüche, bei dem das Polypropylen ein Propylen-Homopolymer ist.

9. Verfahren nach einem der Ansprüche 1 bis 7, bei dem das Polypropylen ein Blockcopolymer aus Propylen und Äthylen, bei dem der Äthylengehalt weniger als 25 Gew.-% beträgt, oder ein Zufallscopolymer aus Propylen und Äthylen ist, bei dem der Äthylengehalt weniger als 8 Gew.-% beträgt.

## Revendications

1. Méthode pour la greffe d'acides et anhydrides alpha,bêta-insaturés sur du polypropylène, comprenant les étapes de :
(a) mélanger le polypropylène, dans un appareil de traitement en phase fondue, avec 0,01 à 5% en poids d'au moins un acide carboxylique alpha,bêta-insaturé ou un anhydride carboxylique alpha,bêta-insaturé et 0,01 à 2% en poids d'un peroxyde organique, à une température au-dessus du point de fusion du polypropylène, ledit appareil de traitement en phase fondue étant une extrudeuse à deux vis composée de deux corps allongés en communication avec des vis rotatives parallèles et adjacentes qui y sont placées, lesdites vis ayant des hélices qui sont en relation de non engrènement ; et
(b) extruder et récupérer le polypropylène greffé.

2. Méthode selon la revendication 1, où le polypropylène est greffé avec de l'acide maléique et/ou de l'anhydride maléique.

3. Méthode selon la revendication 2, où la quantité d'anhydride maléique est comprise entre 0,1 et 2% en poids.

4. Méthode selon l'une quelconque des revendications 1 à 3, où la quantité du peroxyde organique est comprise entre 0,05 et 0,5% en poids.

5. Méthode selon l'une quelconque des revendications précédentes, où le polypropylène greffé est traité avec une solution aqueuse d'hydrate de soude.

6. Méthode selon l'une quelconque des revendications 1 à 4, où le polypropylène greffé a une matière alcaline qui lui est ajoutée.

7. Méthode selon l'une quelconque des revendications précédentes, où au moins l'un d'un polypropylène non greffé et d'un agent durcissant est subséquemment mélangé au polypropylène greffé.

8. Méthode selon l'une quelconque des revendications précédentes, où le polypropylène greffé est un homopolymère de propylène.

9. Méthode selon l'une quelconque des revendications 1 à 7, où le polypropylène est un copolymère séquencé de propylène et d'éthylène où la teneur en éthylène est inférieure à 25% en poids ou bien un copolymère statistique de propylène et d'éthylène où la teneur en éthylène est inférieure à 8% en poids.
